(19) Europäisches Patentamt
European Patent Office
Office européen des brevets

(11) **EP 3 631 355 B1**

(12) **EUROPÄISCHE PATENTSCHRIFT**

(45) Veröffentlichungstag und Bekanntmachung des Hinweises auf die Patenterteilung:
**16.12.2020 Patentblatt 2020/51**

(21) Anmeldenummer: **18713592.6**

(22) Anmeldetag: **20.03.2018**

(51) Int Cl.:
*G01B 9/02* [(2006.01)]     *G01B 11/16* [(2006.01)]

(86) Internationale Anmeldenummer:
**PCT/EP2018/056958**

(87) Internationale Veröffentlichungsnummer:
**WO 2018/215114 (29.11.2018 Gazette 2018/48)**

(54) **SHEAROGRAFIEVORRICHTUNG UND VERFAHREN ZUR ZERSTÖRUNGSFREIEN MATERIALPRÜFUNG MITTELS SHEAROGRAFIE**

SHEAROGRAPHY DEVICE AND METHOD FOR NONDESTRUCTIVE MATERIAL TESTING BY MEANS OF SHEAROGRAPHY

DISPOSITIF DE SHEAROGRAPHIE ET PROCÉDÉ DE CONTRÔLE DE MATÉRIAUX NON DESTRUCTIF PAR SHEAROGRAPHIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2017 DE 102017111250**

(43) Veröffentlichungstag der Anmeldung:
**08.04.2020 Patentblatt 2020/15**

(73) Patentinhaber: **VSE AG**
**66121 Saarbrücken (DE)**

(72) Erfinder: **BUERAKOV, Wassili**
**66663 Merzig (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**DE-A1- 19 856 400    US-A1- 2013 235 897**
**US-A1- 2016 265 900    US-A1- 2017 131 765**
**US-B1- 6 606 160**

- XIN XIE ET AL: "Michelson interferometer based spatial phase shift shearography", APPLIED OPTICS, OPTICAL SOCIETY OF AMERICA, WASHINGTON, DC; US, Bd. 52, Nr. 17, 10. Juni 2013 (2013-06-10) , Seiten 4063-4071, XP001583240, ISSN: 0003-6935, DOI: HTTP://DX.DOI.ORG/10.1364/AO.52.004063
- Wikipedia.Com ET AL: "Laser safety", wikipedia.com, 28. April 2017 (2017-04-28), XP055480262, wikipedia.com Gefunden im Internet: URL:wikipedia.com [gefunden am 2018-05-31]

**Beschreibung**

Der Gegenstand betrifft eine Shearografievorrichtung sowie ein Verfahren zur zerstörungsfreien Materialprüfung mittels Shearografie. Der Gegenstand eignet sich ebenso zur zerstörungsfreien Schwingungsanalyse.

Steigende Anforderungen und Ansprüche an die Qualität von Bauteilen, insbesondere im Bereich der Luftfahrt, des Automobilbaus, der Windkraft oder der Solarkraft, als auch der Bauindustrie erhöhen gleichzeitig die Anforderungen an die Verfahren zur zerstörungsfreien Werkstoffprüfung. Die Werkstoffprüfung soll vor allem während der laufenden Produktion, als auch später zu Wartungszwecken während des Betriebs möglich sein. Eine möglichst frühzeitige Defekt- bzw. Schwachstellenerkennung trägt entscheidend zur Reduktion von Kosten und einer Verlängerung der Lebensdauer einer Konstruktion bei.

Bevorzugt sind Messmethoden, die flächenhaft, berührungsfrei, zerstörungsfrei und hochauflösend Fehlstellen detektieren können. Bekannte Verfahren verwenden insbesondere Ultraschalltechnik, Röntgentechnik, Thermografie, Speckle-Interferometrie. Laservibrometrie, Computertomografie oder auch Terahertz-Technik.

Gerade die Speckle-Interferometrie ermöglicht eine großflächige, berührungslose Materialprüfung. Die räumliche Auflösung der Speckle-Messtechnik ist dabei sehr hoch, so dass bereits kleinste Unregelmäßigkeiten auf der Werkstoffoberfläche, als auch im Inneren des Werkstoffs erkennbar sind. Zu den wohl wichtigsten Speckle-Messverfahren zählen die ESPI (Elektronische Speckle-Pattern-Interferometrie) und die ESPSI (Elektronische Speckle-Pattern-Shearing-Interferometrie).

Beispielsweise beschreibt DE19856400 A1 ein Shearing-Verfahren zur zerstörungsfreien Messung von Objekten, bei dem die vom Objekt reflektierte Strahlung an einem optischen Keil an weniger als vier Grenzflächen gebrochen wird.

Gegenständlich wird die Shearing-Interferometrie näher betrachtet.

Im Bereich der Speckle-Messtechnik lässt sich insbesondere durch Verwendung einer räumlichen Phasenverschiebung eine Werkstoffprüfung durchführen. Hierbei wird insbesondere eine räumliche Phasenverschiebung mit einem Shearelement durchgeführt und das erhaltene Interferogramm mittels einer Fourier-Transformation zwecks mathematischen Extrahierens der Phaseninformationen in einen Spektralbereich transformiert. Bisher bekannte Messanordnungen basierend auf unterschiedlichen Interferometerarten (in der Regel Michelson- oder Mach-Zehnder-Interferometer) zur räumlichen Phasenverschiebung haben jedoch den Nachteil, dass sie mit Lasern hoher Leistung betrieben werden müssen. Dies liegt vor allem an der geringen Lichtausbeute, da weniger als 50% der vom Aufbau empfangenen Lichtintensität letztendlich am Lichtsensor (Detektor) registriert werden können. Außerdem sind die erhaltenen Ergebnisse selten in ausreichender Qualität, so dass sie in den meisten Fällen nicht auswertbar sind.

Aus diesem Grunde lag dem Gegenstand die Aufgabe zugrunde, ein Speckle-Messverfahren zur Verfügung zu stellen, bei dem mit Hilfe räumlicher Phasenverschiebung Interferogramme von ausreichend hoher Qualität bei geringer Leistung der eingesetzten Strahlung sowie einem einfachen und robusten Aufbau erhältlich sind.

Diese Aufgabe wird gegenständlich durch eine Shearografievorrichtung nach Anspruch 1 sowie ein Verfahren nach Anspruch 12 gelöst.

Gegenständlich ist erkannt worden, dass die Shearografie basierend auf der räumlichen Phasenverschiebung in Bezug auf den optischen Aufbau mittels einer zusätzlichen Blendeinrichtung und den Ersatz eines klassischen Interferometers durch ein Shearelement optimiert werden kann.

Bei bekannten interferometrischen Messverfahren, die auf der zeitlichen Phasenverschiebung basieren, ist es notwendig, insgesamt zumindest sechs Aufnahmen eines Prüflings zu erstellen. Diese Notwendigkeit resultiert aus den physikalischen Gegebenheiten, da die Grundgleichung drei unbekannte Größen aufweist. Zu den zu bestimmenden Größen zählen die Hintergrundintensität, die Modulationen des Interferenzterms und die relative Phase. Es werden folglich drei Aufnahmen des Messobjektes im Grundzustand und anschließend weitere drei Aufnahmen nach der Belastung des Prüflings vorgenommen. Zwischen den Aufnahmen erfolgt eine Phasenverschiebung meistens mittels eines Piezoaktors. Auf diese Weise wird ein lösbares Gleichungssystem bestehend aus sechs Gleichungen und sechs unbekannten erzeugt. Zur Erhöhung der Robustheit der zeitlichen Phasenverschiebung wird oft eine Methode mit insgesamt acht Aufnahmen und sechs Phasenverschiebungen eingesetzt. Zwischen den einzelnen Aufnahmen dürfen während der Messung keine Vibration oder sonstige Störungen auftreten, da dadurch die Messung unbrauchbar wird.

Gegenständlich ist erkannt worden, dass durch eine Veränderung des herkömmlichen Messaufbaus die Anzahl der Aufnahmen bis auf zwei reduziert werden kann. Auch ist erkannt worden, dass die beiden Aufnahmen zeitlich sehr kurz hintereinander erfasst werden können und eine erste Aufnahme im Grundzustand und eine zweite Aufnahme nach einer Zustandsänderung des Prüflings erfolgen kann.

Diese Möglichkeit wird dadurch gewährleistet, dass die räumliche Phasenverschiebung in Bezug auf den optischen Aufbau mittels einer zusätzlichen Beugungseinrichtung verbessert wird. Die Beugungseinrichtung kann dabei vor oder auch hinter dem Shearelement angeordnet sein. Durch die Beugungseinrichtung ist es möglich, die von der Strahlquelle ausgestrahlte, über das Messobjekt reflektierte Strahlung zu beugen.

In diesem Zusammenhang sei erwähnt, dass für eine interferometrische Materialprüfung eine kohärente Strahlquelle notwendig ist. Durch das Shearelement werden die von dem Messobjekt reflektierten Strahlen auf unterschiedlich langen Strahlwegen zu der Aufnahmeeinrichtung geleitet. Durch diese unterschiedlich langen Strahlwege erscheint auf dem Sensor der Aufnahmeeinrichtung das Interferenzbild der Strahlen, die von dem Messobjekt über das Shearelement zu der Aufnahmeeinrichtung geleitet wurden. Aufgrund der kohärenten Strahlquelle überlagern sich die Strahlen zu einem Interferogramm.

Durch den Einsatz der optischen Beugungseinrichtung ist es möglich, im Frequenzbereich des Interferogramms eine Trennung der Hintergrundintensität von der gesuchten Phaseninformation zu erhalten. Aufgrund der Beugungseinrichtung und des Interferometers ist es jedoch bisher notwendig, die Strahlquelle mit einer ausreichend hohen Strahlleistung auszustatten. Durch die Beugungseinrichtung wird ein großer Teil der Strahlungsintensität gedämpft, so dass bisher die auf dem Sensor der Aufnahmeeinrichtung erfassten Interferogramme wenig aussagekräftig waren.

Gegenständlich ist nun erkannt worden, dass durch einen geänderten geometrischen Aufbau im Gegensatz zu einem herkömmlichen Michelson bzw. Mach-Zehnder-Interferometer (oder auch anderen Interferometern) die Strahlung, welche durch das Shearelement geteilt und unter einem gewissen Versatz erneut überlagert wird, an weniger als vier Grenzflächen des Shearelements gebrochen wird.

Durch eine geeignete Anordnung des Shearelements sind die Anzahl der Brechungen des transmittierten Strahls gegenüber herkömmlichen Anordnungen reduziert, so dass das Interferogramm gut auswertbare Ergebnisse liefert. Außerdem kann in dem Shearelement auf eine teilreflektierende Fläche verzichtet werden, da die Strahlen gegenständlich unmittelbar und nahezu vollständig durch das Shearelement zu der Aufnameeinrichtung geleitet werden.

Durch eine geeignete Anordnung zwischen der Beugungseinrichtung, dem Shearelement und der Aufnahmeeinrichtung ist es möglich, die relative Phase in dem Spektralbereich der Interferogramms durch einen geeigneten Filter (Bandpass, Tiefpass, etc) z.B. durch Maskierung zu extrahieren. Durch die räumliche Anordnung von Beugungseinrichtung, Shearelement und Aufnahmeeinrichtung zueinander wird in der Spektralfunktion des Interferogramms ein ausreichender Frequenzabstand zwischen dem Beugungsmuster nullter Ordnung (die Hintergrundintensität) und dem Beugungsmuster erster Ordnung (die Phaseninformation) erreicht. Der Filter kann dann so eingerichtet werden, dass das Beugungsmuster erster Ordnung durchgelassen (maskiert) wird.

Durch die gegenständliche Phasenverschiebung wird somit eine schnelle und wenig störungsempfindliche Messung ermöglicht. Außerdem kann der Messaufbau sowohl gegenüber herkömmlichen räumlichen als auch zeitlichen Aufbauten zur Phasenverschiebung erheblich vereinfacht werden, da im Gegensatz zur herkömmlichen Messmethoden, die auf einer zeitlichen Zeitverschiebung basieren, kann eine zeitliche Phasenverschiebung entfallen. Aktive Elemente im Messaufbau und somit eine Steuerung dieser können entfallen. Im Gegensatz zu herkömmlichen Messmethoden mit räumlicher Zeitverschiebung ist der gegenständliche Aufbau erheblich vereinfacht und die Güte der Messergebnisse kann gesteigert werden.

Mit Hilfe der gegenständlichen Shearografievorrichtung ist es möglich, nahezu in Echtzeit Interferogramme zu erfassen und diese Interferogramme in Echtzeit miteinander zu korrelieren, um Shearogramme zu erhalten. Mit Hilfe geeigneter elektronischer Verfahren kann nahezu in Echtzeit das Ergebnis der Messung dargestellt werden.

Die mit Hilfe der gegenständlichen Shearografievorrichtung erfassten Shearogramme ermöglichen eine quantitative Materialprüfung. Die Shearogramme lassen sich quantitativ auswerten und somit quantitative Aussagen zu beispielsweise Materialeigenschaften treffen. Dabei lässt sich die gegenständliche Shearografievorrichtung insbesondere im Bereich der Serienproduktion, der Inspektion, der Modalanalyse sowie für Forschung und Entwicklung einsetzen. Insbesondere kann die Korrelation zweier Interferogramme durch Maskierung der jeweiligen Spektralfunktionen mit geeigneten Filtern erhalten werden. Die Ermittlung und Einblendung der quantitativen Endergebnisse bereits während der Messung steigert die Benutzerfreundlichkeit um ein Vielfaches.

Insbesondere ist eine Schwingungsanalyse bevorzugt. Durch die gegenständliche Möglichkeit, zwei Interferogramme nahezu in Echtzeit zu einem Shearogramm zu verbinden, kann in nahezu Echtzeit eine Analyse erfolgen. Wird nun eine Schwingungsbelastung in nahezu Echtzeit ausgewertet, so können laufend Shearogramme aus zeitlich (nicht zwingen unmittelbar) aufeinanderfolgenden Interferogrammen erstellt werden und das Messobjekt im Schwingungszustand bewertet werden. Da die Lichtausbeute durch die gegenständliche Anordnung erheblich erhöht ist, können Hochgeschwindigkeitskameras von Bildraten von über 50 frames per second (fps), insbesondere mit mehr als 100 fps, insbesondere auf mehr als 500fps oder mehr als 1000fps die Interferogramme mit einem ausreichend hohen Kontrast erfassen.

Eine Erfassung von Fehlstellen bei dynamischer Belastung kann insbesondere durch Einkopplung von elastischen Wellen, wie z.B. Lamb-Wellen, in das Messobjekt erfolgen. Wellen interagieren direkt mit den Fehlstellen und können mit der gegenständlichen Messanordnung unmittelbar detektiert werden. Die Amplitude der Anregungswellen beträgt in Abhängigkeit von der Anregungsfrequenz lediglich einige 100 nm oder weniger. Mit Hilfe der klassischen Shearografie sind somit elastische Wellen kaum nachweisbar, da aufgrund der geringen Amplitude keine typischen Streifenmuster entstehen. Durch die gegenständliche räumliche Phasenverschiebung ist es möglich, elastische Wellen zu detektieren und dadurch eine zerstörungsfreie Werkstoffprüfung in einem dynamischen Belastungszustand durchführbar.

Zunächst ist durch die neuartige Anordnung des Shearelementes die Strahlquelle mit einer geringeren Leistung gegenüber herkömmlichen Verfahren möglich. Insbesondere ist die Strahlquelle ein Laser geringer Intensität. Dies ist insbesondere eine Strahlquelle mit einer Leistung der Laserklasse 1, 1M, 2, 2M oder 3R nach DIN EN 60825-1: 2008-05, insbesondere ein einziger Laser einer der genannten Klassen oder auch mehrere Laser, deren Gesamtleitung die Leistung der genannten Klassen nicht übersteigt.

Durch die Verwendung der kohärenten Strahlquelle ergibt sich bei einer Reflexion an einem Messobjekt ein sogenanntes Speckle-Muster, welches auch als Laser-Granulation bekannt ist.

Von einer auf der Mikroebene rauen Oberfläche werden die ankommenden Strahlen entsprechend des Huygens-Fresnelschen-Prinzips an jeder mikroskopischen Unebenheit in Form von kugel- bzw. kreisförmigen Elementarwellen mit einer der Topologie entsprechenden Phasenverschiebung gestreut. Die Verteilung der Intensität des gestreuten Lichtes ist auf der Abbildungsebene, bei Oberflächen ohne systematische Struktur, völlig zufällig. Jeder Beobachter sieht folglich ein anderes Muster. Diese Art des Musters wird als die sogenannte subjektive Speckle-Erscheinung bezeichnet, da ein Abbildungssystem, beispielsweise das menschliche Auge oder eine Kamera, verwendet wird.

Die mittlere charakteristische Größe eines einzelnen Speckles hängt von der verwendeten Optik ab, die zur Erzeugung einer scharfen Abbildung eingesetzt wird. Die ankommenden Strahlen werden im Abstand z zu der Brennebene überlagert. Dabei kann eine bestimmte Speckle-Größe $d_{x,y}$ nicht unterschritten werden. Der Durchmesser $d_{x,y}$ des Speckles hängt zusätzlich von der Wellenlänge der verwendeten Strahlung, insbesondere des verwendeten Lasers ab. Der Durchmesser des Speckles ergibt sich zu

$$d_{x,y} = 2{,}44 \frac{\lambda z}{D}.$$

Dabei ist D der Durchmesser der Öffnung der Beugungseinrichtung. Über eine entsprechende Blendöffnung D kann also die nötige Größe $d_{x,y}$ des Speckles eingestellt werden.

Gegenständlich wird vorzugsweise ein Neodym-dotierter Yttrium-Aluminium-Granat-Laser (ND: YAG-Laser) mit einer Wellenlänge von 520 nm oder eine/mehrere Laserdiode(n) im sichtbaren oder infraroten Spektralbereich verwendet. Die Blende bzw. der Durchmesser der Blende D wird vorzugsweise so eingestellt, dass eine Specklegröße drei bis vier Pixel auf dem Sensor der Aufnahmeeinrichtungen beträgt.

Die Fresnel-Zahl der Blende berechnet sich aus

$$F_{Zahl} = \frac{\left(D/2\right)^2}{\lambda \cdot z_{B,K}},$$

wobei D der Durchmesser der Blende ist, λ die Wellenlänge der Strahlquelle und $Z_{B,K}$ der Abstand von der Blende B bis zum Bildsensor (Aufnahmeeinrichtung) K. Es hat sich gezeigt, dass eine Fresnel-Zahl zwischen 3 und 20 gegenständlich für die Beugungseinrichtung bevorzugt ist. Insbesondere ist die Fresnel-Zahl im Bereich 10 bevorzugt.

Bevor die durch die Beugungseinrichtung gebeugten Strahlen auf die Aufnahmeeinrichtung treffen, wird gegenständlich ein Shearelement vorgeschlagen. Das Shearelement ist jedoch so, dass nicht, wie herkömmlicherweise vier oder mehr Brechungen der Strahlung an dem Shearelement erfolgen, sondern an weniger als vier Grenzflächen des Shearelementes die Strahlung gebrochen wird. Durch diese geringere Anzahl an Brechungen und den optimierten Strahlengang wird die Strahlungsintensität auf dem Sensor der Aufnahmeeinrichtung optimiert.

Vor dem Shearelement oder im sonstigen Bereich des Strahlengangs kann ein optischer Bandpassfilter, insbesondere ein Spektralfilter, vorzugsweise ein Absorptionsfilter eingesetzt werden. Insbesondere liegt das Durchlassspektrum im Bereich des Frequenzbereichs der Strahlquelle.

Die Aufnahmeeinrichtung hat in der Regel ein Objektiv z.B. eine Linse und einen Bildsensor. Gegenständlich ist es möglich, das Objektiv der Aufnahmeeinrichtung vor oder hinter der Beugungseinrichtung und dem Shearelement anzuordnen. Somit tritt die reflektierte Strahlung entweder zunächst durch die Linse der Aufnahmeeinrichtung, dann die Beugungseinrichtung und anschließend das Shearelement, um auf den Sensor der Aufnahmeeinrichtung zu treffen oder zunächst durch die Beugungseinrichtung und das Shearelement und anschließend die Linse, um auf den Sensor der Aufnahmeeinrichtung aufzutreffen.

Durch die gegenständliche Anordnung sind lediglich Beugungseinrichtung, Shearelement und Aufnahmeeinrichtung zueinander zu justieren. Die Störanfälligkeit des Systems wird erheblich verringert und die Aufnahmequalität, insbesondere in nicht stationären, insbesondere mobilen Anwendungen, erhöht.

Ferner ist im Gegensatz zu herkömmlichen Shearografievorrichtungen bevorzugt im Bereich des Shearelementes kein Strahlteiler notwendig. Die Strahlen treten von der Beugungseinrichtung lediglich einmalig durch das Shearelement hindurch und werden dort nicht an einer teilreflektierten Ebene geteilt. Somit werden die Strahlen nicht durch einen Strahlenteiler des Shearelements reflektiert, was zu einer erhöhten Lichtausbeute führt.

Ferner ist es möglich, dass eine Stabilisierungseinrichtung in der Art eines Kameraobjektives vorgesehen sein kann, an der nicht nur die Aufnahmeeinrichtung bzw. die Linse der Aufnahmeeinrichtung angeordnet ist, sondern auch die Beugungseinrichtung als auch das Shearelement. Die Stabilisierung durch diese Einrichtung wirkt somit nicht nur auf das Objektiv bzw. die Linse der Aufnahmeeinrichtung, sondern darüber hinaus auch auf die Beugungseinrichtung als auch das Shearelement.

Das Shearelement ist bevorzugt derart angeordnet, dass zumindest ein erster Teil der durch die Beugungseinrichtung transmittierten, von der Aufnahmeeinrichtung erfassten Strahlung der Strahlquelle an zwei Grenzflächen des Shearelementes gebrochen wird. Durch das Brechen an lediglich zwei Grenzflächen des Shearelementes wird die Lichtausbeute weiter erhöht.

Bevorzugt ist das Shearelement ein Biprisma oder ein optischer Keil. Auch kann ein Strahlteiler mit lateralem Versatz, ein Calcite Beam Displacer, ein Wollaston Prisma, eine Anordnung von zwei oder Blenden oder dergleichen als Shearelement zum Einsatz kommen.

Gemäß einem Ausführungsbeispiel wird vorgeschlagen, dass das Shearelement derart angeordnet ist, dass zumindest ein zweiter Teil der durch die Beugungseinrichtung transmittierten, von der Aufnahmeeinrichtung erfassten Strahlung der Strahlquelle von dem Shearelement ungebrochen von der Aufnahmeeinrichtung erfasst wird. Das bedeutet, dass durch die Beugungseinrichtung transmittierte Strahlung ungebrochen durch das Shearelement zumindest in Teilen auf die Aufnahmeeinrichtung auftreffen kann. Ein erster Teil der Strahlung wird durch das Shearelement gebrochen und somit dessen optische Pfad gegenüber dem optischen Pfad des zweiten Teils, der ungebrochen ist, verlängert. Dies führt zu einer geringfügigen Verschiebung der erfassten Bilder des Messobjektes zueinander in der Bildebene.

Um die zu untersuchende Aufnahmefläche zu vergrößern, wird auch vorgeschlagen, dass die aus der Strahlquelle austretende Strahlung zunächst durch eine Aufweitungslinse aufgeweitet wird. Auch ist es möglich, als Strahlquelle eine oder mehrere Laserdioden einzusetzen.

Gemäß einem Ausführungsbeispiel wird vorgeschlagen, dass die Beugungseinrichtung eine Lochblende, eine Streifenblende oder ein optisches Gitter ist. Insbesondere die Verwendung einer Spaltblende ist vorteilhaft. Ein Aufnahmesensor in der Aufnahmeeinrichtung ist vorzugsweise ein CCD- oder ein CMOS-Sensor. Dieser ist vorzugsweise rechteckig. Bei einem solchen Sensor bietet sich eine Schlitzblende an, da die sich aus dem Interferogramm ergebende Spektralfunktionen dann besser zum Formfaktor des Sensors passt.

Bevorzugt verfügt die Aufnahmeeinrichtung über zumindest einen optischen Sensor. Dieser kann ein CCD- Sensor oder ein CMOS-Sensor sein. Mit Hilfe dieses Sensors kann ein Interferogramm der von dem Messobjekt reflektierten Strahlung erfasst werden. Neben dem Sensor umfasst die Aufnahmeeinrichtung eine Optik, welche in einem Objektiv untergebracht ist und beispielsweise zumindest eine Linse aufweist. Die Linse bzw. das Objektiv der Aufnahmeeinrichtung kann, wie zuvor bereits erläutert, vor als auch hinter der Beugungseinrichtung vorgesehen sein.

Insbesondere für eine mobile Anwendung sind die Beugungseinrichtung, das Shearelement und die Aufnahmeeinrichtung auf einem gemeinsamen, mobilen Träger montiert. Der mobile Träger kann z.B. eine Kamera oder ein Kameragehäuse sein. Insbesondere kann das Shearelement und die Beugungseinrichtung vor oder hinter einem Objektiv in der Kamera verbaut sein. Dazu können zusätzlich noch die Strahlquelle und gegebenenfalls eine Aufweitungslinse auf dem gleichen mobilen Träger montiert sein. Auf diesem mobilen Träger können die darauf montierten Elemente ortsfest zueinander fixiert werden, so dass eine Justage der Shearografievorrichtung vor dem Einsatz möglich ist und während des Einsatzes nicht mehr notwendig ist. Insbesondere erfolgt die Ausrichtung (Abstand und/oder Winkel zueinander) zwischen Beugungseinrichtung, Shearelement und Aufnahmeeinrichtung vor einer Messung. Während der Messung sind die Elemente ortsfest zueinander und es erfolgt keine Kalibrierung während der Messung. Die axiale Ausrichtung von Shearelement und Beugungseinrichtung um die optische Achse des Objektivs herum kann jedoch variiert werden. So können Shearelement und Beugungseinrichtung um die optische Achse des Objektivs herum um 90° gemeinsam verdreht werden. Dies kann insbesondere für die Art der zu messenden Fehlstelle relevant sein. Fehlstellen können unterschiedlich ausgerichtet sein. Durch Verdrehen von Shearelement und Beugungseinrichtung kann eine Überlagung der Interferogramme in x-Richtung oder in y-Richtung erfolgen. Selbst bei einer solchen Verdrehung kann der Abstand der Elemente zueinander unverändert bleiben. Es ist beispielsweise möglich, die Verdrehung von Shearelement und Beugungseinrichtung motorisch zu bewirken, so dass ein Messobjekt nach Fehlstellen sowohl in x-Richtung als auch in y-Richtung untersucht werden kann, ohne dass ein manueller Eingriff in die Anordnung notwendig ist. Dies kann insbesondere für einen mobilen Einsatz relevant sein.

Mit Hilfe der Shearografievorrichtung können mehrere Interferogramme in zeitlicher Abfolge erfasst werden. Die Interferogramme können miteinander korreliert und ein Shearogramm erhalten werden. Bei der Korrelation kann beispielsweise eine Phaseninformation der beiden Interferogramme verwendet werden und diese Phaseninformation kann beispielsweise durch eine einfache Subtraktion miteinander korreliert werden.

Insbesondere durch die Beugungseinrichtung wird die Intensitätsinformation von der Phaseninformation im Spektralbereich getrennt. Durch geeignete Wahl der Öffnung der Beugungseinrichtung und/oder des Shearelement und/oder des Abstandes der Beugungseinrichtung von dem Shearelement und/oder dem Messobjekt und/oder durch geeignete Einstellung des Abstandes zwischen der Beugungseinrichtung und der Aufnahmeeinrichtung lassen sich die Spektralinformation von Intensität und Phase derart voneinander trennen, dass im Spektralbereich mit Hilfe eines geeigneten Filters die Phaseninformation aus dem Spektrum gewonnen wird. Insbesondere die Öffnung der Beugungseinrichtung, z.B. der Öffnungsdurchmesser sowie der Shearwinkel des Shearelements können einen relevanten Einfluss auf die spektrale Verteilung der Interferometer und somit die Möglichkeit, durch geeignete Filter eine Trennung der Phaseninformationen von den Hintergrundinformationen zu erhalten. Dazu wird vorgeschlagen, dass aus dem Interferogramm eine Spektralfunktion erstellt wird. Dies kann mit Hilfe einer Auswerteeinrichtung erfolgen. Dabei ist insbesondere eine Fourier-Transformation ein geeignetes Mittel. In dem Spektralbereich lässt sich ein Filter derart auf die Spektralfunktion anwenden, dass ausschließlich die Phaseninformation aus dem Spektogramm erhalten bleibt und beispielsweise die Information zur Hintergrundintensität entfernt wird.

Das Interferogramm kann nach der Maskierung beispielsweise wieder in den Ortsbereich transformiert werden. Dies kann z.B. mittels einer inversen Fourier Transformation erfolgen. Zur pixelweisen Bestimmung der Phaseninformation kann der Arkustangens des Imaginärteils des rücktransformierten Interferogramms dividiert durch den Realteil des rücktransformierten Interferogramms ermittelt werden. Zur Bestimmung der relativen Phase wird beispielsweise eine pixelweise Subtraktion der Phaseninformation der beiden Interferogramme, insbesondere bei unterschiedlichen Belastungszuständen vorgenommen. Andere Methoden, die beiden Phaseninformationen in Relation zueinander zu stellen sind, möglich, z.B. durch Addition.

Die berechnete relative Phasenänderung ist modulo 2pi gefaltet und mit Rauschen behaftet. Zur Eliminierung des Rauschens wird ein ungefiltertes Shearogramm vorzugsweise in eine Sinus- und eine Cosinus-Funktion zerlegt. Die beiden Anteile werden getrennt voneinander mit einem geeigneten Filter, z.B. einem Tiefpassfilter insbesondere mit einem Mittelwertfilter oder einem Medianfilter gefiltert. Nach der getrennten Filterung der beiden Terme erfolgt anschließend die Berechnung der Arcustangens-Funktion, indem Sinus-Term durch den Cosinus-Term geteilt wird. Eine relative Phasendifferenz ergibt sich aufgrund der unterschiedlichen Belastungen zwischen den beiden Interferogrammen und zeigt annähernd die Dehnung des Messobjektes an, insbesondere den ersten Gradienten der Verformung in Shearrichtung.. Eine Fehlstelle führt zu einer Variation in der Dehnung, welche durch Integration, insbesondere nummerische Integration in eine Information zur Verformung umgerechnet werden kann. Somit ist es möglich, entweder die Dehnung und/oder Verformung des Messobjektes zwischen dem unbelasteten und dem belasteten Zustand zu detektieren und somit bei einer lokal veränderten Dehnung bzw. einer lokal veränderten Verformung auf eine Fehlstelle zu schließen.

Ein erstes Interferogramm wird in einem ersten Belastungszustand (z.B. unbelastet) erfasst und ein zweites Interferogramm wird in einem zweiten Belastungszustand erfasst. Der Belastungszustand kann durch unterschiedliche Anregungen des Messobjektes bewirkt werden. Insbesondere kann das Messobjekt statisch, induktiv, optisch, dynamisch, hydrostatisch oder mittels Ultraschall angeregt werden. Die optische Anregung kann mittels Laser oder mittels Wärmestrahler erfolgen.

Wie bereits erläutert, kann der nicht ortsgebundene, z.B. mobile Träger die Shearografievorrichtung tragen. Der Träger ist dann insbesondere auf einer Inspektionsplattform, insbesondere einer Drohne montiert. Insbesondere für den Bereich der Windkraftanlagen kann die Drohne eine Flugdrohne sein. Mit Hilfe der Flugdrohne kann beispielsweise eine Windkraftanlage, dabei beispielsweise deren Rotorblätter in der Wartung und Inspektion, zumindest jedoch nach der Anlieferung und nach der Montage zerstörungsfrei geprüft werden.

Für eine unmittelbare Auswertung der Prüfergebnisse ist es möglich, dass eine Kommunikationseinrichtung zur drahtlosen Übertragung der Bilder der Aufnahmeeinrichtung und/oder der Auswerteergebnisse der Auswerteeinrichtung eingerichtet ist.

Die Übertragung kann dabei insbesondere über WLAN, Bluetooth, ZigBee oder dergleichen erfolgen. Mit Hilfe der Inspektionsplattform ist es auch möglich, Dächer von Gebäuden, beispielsweise Stadien, Einkaufshallen oder dergleichen zu überprüfen. Auch Türme oder Brücken können in kurzer Zeit mit Hilfe der gegenständlichen Shearografievorrichtung auf der Inspektionsplattform überprüft werden. Die Überprüfung kann dabei in Echtzeit erfolgen, da die Phaseninformation bzw. die hieraus abgeleiteten Dehnungs- oder Verformungsinformationen in nahezu Echtzeit vorliegen. Es müssen lediglich zwei Interferogramme aufgenommen werden, um hieraus mittels der beschriebenen Methoden eine Information zu der Dehnung bzw. Verschiebung des Messobjektes zu erhalten. Die Berechnung erfolgt vorzugsweise nummerisch und führt dazu, dass mit herkömmlichen Rechnern in nahezu Echtzeit Messergebnisse vorliegen.

Die Aufnahmeeinrichtung kann dabei eine Spiegelreflexkamera mit einem herkömmlichen Sensor sein. Es ist keine aufwendige Justage oder Steuerung von Komponenten notwendig.

Durch den optimierten Einsatz des Shearelementes und der Beugungseinrichtung wird die Strahlungsausbeute optimiert. Aus diesem Grunde wird gemäß eines weiteren Aspektes vorgeschlagen, dass die Strahlquelle eine Gesamtleistung der Laserklasse 1, 1M, 2, 2M oder 3R nach DIN EN 60825-1:2008-05 nicht überschreitet.

Mit Hilfe der gegenständlichen Shearografievorrichtung ist eine räumliche Phasenverschiebung möglich. Diese ermöglicht es, Messergebnisse in Echtzeit zu erhalten. Durch die Berechnung der Phaseninformation mit Hilfe des Zwischenschrittes über die Filterung im Spektralbereich ist es möglich, die Phaseninformation besonders schnell zu erhalten. Erfolgt eine Maskierung der Phaseninformation, insbesondere wie beschrieben, kann aus den beiden Interferogrammen die Dehnung in Echtzeit berechnet werden. Es werden lediglich zwei Aufnahmen bzw. Interferogramme desselben Messobjektes in unterschiedlichen Belastungszuständen benötigt.

Es ist möglich, ein jeweiliges Referenzbild bzw. ein jeweiliges Interferogramm in einem Zwischenspeicher eines Rechners abzulegen. Anschließend kann eine Transformation in den Spektralbereich, insbesondere mittels der Fourier-Transformation erfolgen. Die anschließende Maskierung und Rücktransformation ist ebenfalls in modernen Rechnern besonders einfach möglich, so dass die jeweils aktuelle Aufnahme in Bruchteilen einer Sekunde verarbeitet werden kann und die Phaseninformation einer jeweiligen Aufnahme erhältlich ist. Durch die Korrelation zweier Aufnahmen, insbesondere zweier Phaseninformationen aus den Interferogrammen können die Informationen zu der Dehnung besonders einfach erhalten werden.

Nachfolgend wird der Gegenstand anhand einer Ausführungsbeispiele zeigenden Zeichnung näher erläutert. In der Zeichnung zeigen:

Fig. 1 ein erster schematischer Aufbau einer gegenständlichen Shearografievorrichtung;

Fig. 2 eine zweite schematische Anordnung einer gegenständlichen Shearografievorrichtung;

Fig. 3a ein erstes Shearelement gemäß einem Ausführungsbeispiel;

Fig. 3b ein zweites Shearelement gemäß einem Ausführungsbeispiel;

Fig. 4 eine Shearografievorrichtung auf einem gemeinsamen Träger;

Fig. 5 der Einsatz einer gegenständlichen Shearografievorrichtung;

Fig. 6a der schematische Ablauf eines Verfahrens zur Erfassung eines Shearogramms;

Fig. 6b eine Spektralverteilung eines Interferogramms einer kreisrunden Beugungseinrichtung;

Fig. 7 eine nummerische Interpretation eines erfassten Shearogramms.

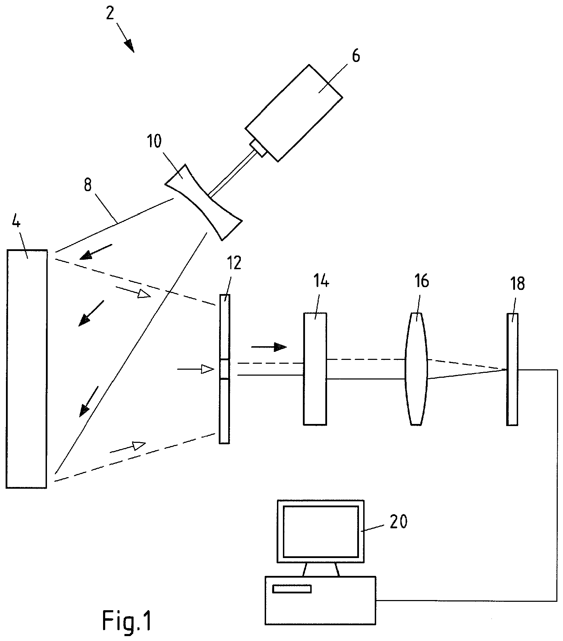

Fig. 1 zeigt eine Shearografievorrichtung 2 zur zerstörungsfreien Werkstoffprüfung eines Werkstücks 4. Die gegenständliche Shearografievorrichtung 2 umfasst eine Strahlquelle 6, beispielsweise einen Laser, insbesondere einen Laser aus Laserdioden, der beispielsweise bei einer Wellenlänge von beispielsweise 650 nm kohärentes Licht ausstrahlt. Der Lichtstrahl 8 wird mit Hilfe einer optionalen Aufweitungslinse 10 auf das Werkstück 4 geleitet. Die reflektierten Lichtstrahlen 8 von dem Werkstück 4 treffen auf eine Beugungseinrichtung 12, beispielsweise eine Spaltblende. Der gebeugte Lichtstrahl tritt über ein Shearelement 14, in welchem eine Entstehung von zwei geringfügig zueinander verschobenen Bildern des Messobjekts erfolgt und eine Optik 16, beispielsweise ein Objektiv, insbesondere eine Linse, auf einen Fotosensor 18, beispielsweise ein CMOS-Sensor. Das von dem Fotosensor 18 erfasste Interferogramm wird durch eine Auswerteeinrichtung 20 gespeichert und mit weiteren Interferogrammen korreliert, um ein Shearogramm zu erhalten.

Wesentlich an der gegenständlichen Anordnung ist, dass das Shearelement 14 im unmittelbaren Strahlengang zwischen dem Fotosensor 18 und der Beugungseinrichtung 12 ist und der Lichtstrahl 8 an dem Shearelement 14 an weniger als vier Grenzflächen gebrochen wird. Dies führt zu einer optimierten Lichtausbeute am Fotosensor 18, so dass die erfassten Bilder unmittelbar für eine Erstellung eines Shearogramms verwendet werden können.

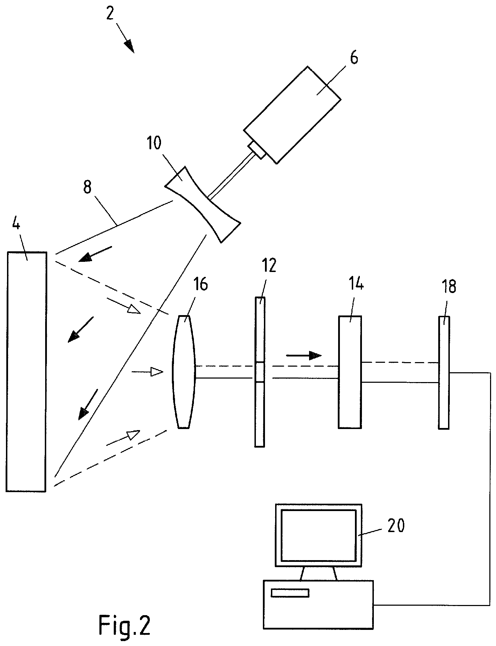

Fig. 2 zeigt ein weiteres Ausführungsbeispiel einer Shearografievorrichtung 2, welche sich von der Shearografievorrichtung 2 gemäß der Fig. 1 insbesondere dadurch unterscheidet, dass sowohl die Beugungseinrichtung 12 als auch das Shearelement 14 hinter dem Objektiv 16 der Aufnahmeeinrichtung angeordnet ist. Es ist erkannt worden, dass im Strahlweg der Lichtstrahlen 8, die reflektierten Strahlen von dem Werkstück 4 entweder zunächst durch die Beugungseinrichtung 12 und das Shearelement 14 geleitet werden und anschließend über das Objektiv 16 bzw. die Linse zu dem Fotosensor 18 geleitet werden können oder das Objektiv 16 zwischen dem Werkstück 4 und der Beugungseinrichtung 12 angeordnet sein kann. Beides führt zu einer ausreichend guten Lichtausbeute zur Erstellung des Interferogramms im Bereich der Auswerteeinrichtung 20.

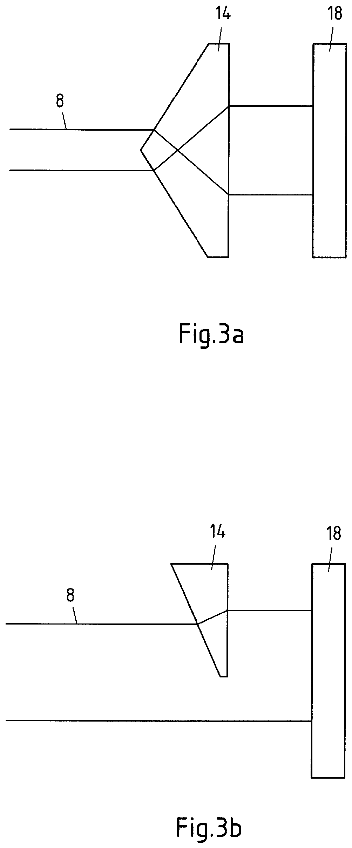

Anders als bei beispielsweise herkömmlichen Michelson-Interferometern ist das Shearelement 14 wie in den Figuren 3a und 3b gezeigt so gestaltet, dass es ohne eine teilreflektierende Fläche auskommt. Die Lichtstrahlen 8 treten durch das Shearelement 14 so hindurch, dass insbesondere nur an zwei Grenzflächen eine Brechung des Lichts erfolgt.

Fig. 3a zeigt ein Biprisma als Shearelement 14, welches sich dazu eignet, eine räumliche Phasenverschiebung der Lichtstrahlen 8 zu bewirken. An dem Fotosensor 18 ist die Lichtausbeute ausreichend groß, da im Shearelement 14 keine teilreflektierende Fläche vorgesehen ist, die den Lichtstrahl auf einen außerhalb des Shearelementes 14 angeordneten Spiegel leitet, wie das bei herkömmlichen Michelson-Interferometern der Fall ist.

Gemäß der Fig. 3a treten alle auf dem Fotosensor 18 auftreffenden Lichtstrahlen, welche von dem Werkstück 4 reflektiert sind durch die Beugungseinrichtung 12 transmittieren durch das Shearelement 14. Das Shearelement 14 ist ein Biprisma.

Es ist jedoch auch möglich, dass das Shearelement 14, wie beispielsweise in der Fig. 3b gezeigt, nur Teile der Lichtstrahlen 8 bricht und andere Teile der Lichtstrahlen 8 ungebrochen auf den Fotosensor 18 auftreffen. In der Fig. 3b ist das Shearelement 14 beispielhaft ein optischer Keil. Zu erkennen ist, dass ein erster durch die Beugungseinrichtung transmittierter Lichtstrahl 8 von dem Shearelement 14 gebrochen wird, wohingegen ein zweiter Lichtstrahl ungebrochen von der Beugungseinrichtung 12 auf den Fotosensor 18 treffen kann. Auch hierdurch entstehen zwei geringfügig verschobene Bilder des Messobjektes in der Abbildungsebene.

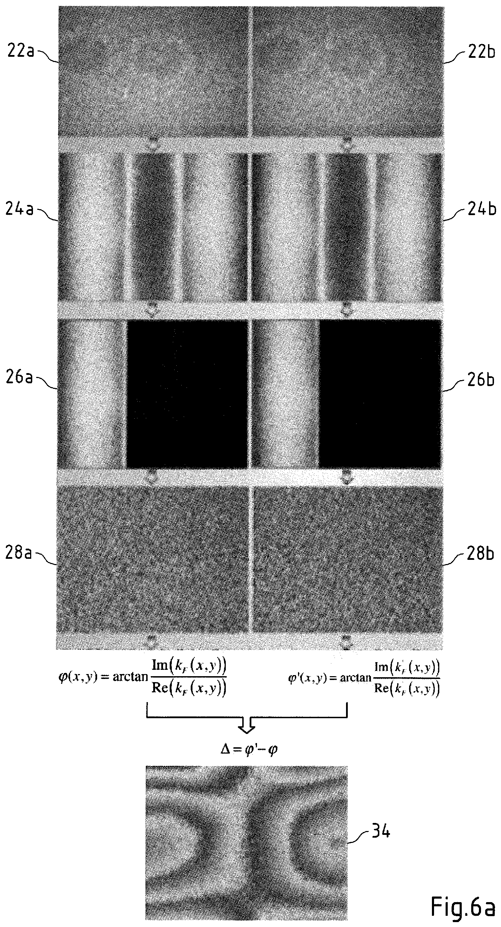

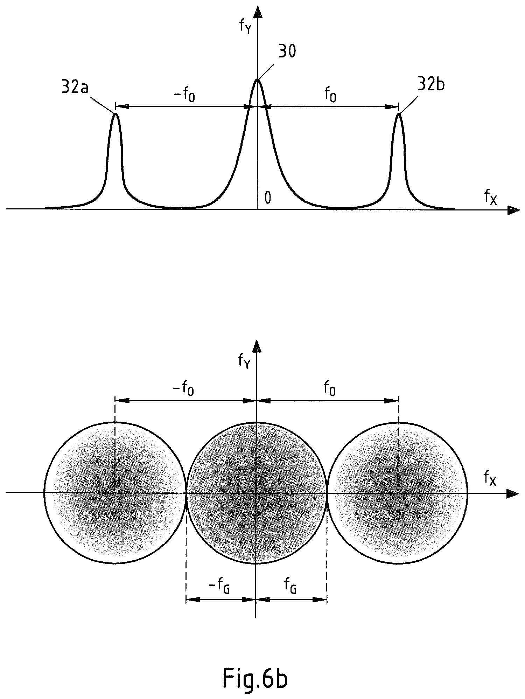

Durch die Kombination der Beugungseinrichtung 12 mit dem Shearelement 14 ist es möglich, das Interferogramm spektral zu zerlegen. Fig. 6 zeigt einen beispielhaften Ablauf eines Verfahrens zur Erstellung eines Shearogramms. Hierbei werden zunächst zeitlich aufeinanderfolgend zwei Interferogramme 22a, 22b mit einer Shearografievorrichtung 2 erfasst. Die Interferogramme 22a, 22b stellen ein Specklemuster des beobachteten Werkstücks 4 dar, wobei das erste Interferogramm 22a das Werkstück 4 im unbelasteten Zustand darstellt und das zweite Interferogramm 22b das Werkstück 4 in einem belasteten Zustand.

Die nachfolgenden Schritte 24-28 können unmittelbar nach der Erfassung eines jeweiligen Interferogramms 22a, 22b durchgeführt werden oder nachdem die beiden Interferogramme 22a, 22b erstellt wurden.

Durch eine geeignete Einstellung der Fresnel-Zahl an der Beugungseinrichtung 12, insbesondere <20 und >3 wird eine ausreichende gute Qualität der Shearogramme bewirkt. Eine geeignete Spreizung des Spektrogramms wird insbesondere mit Hilfe einer geeigneten Beugungseinrichtung und einem geeigneten Shearelement erreicht, wie nachfolgend noch gezeigt wird. Hierbei lässt sich der Abstand zwischen der Beugungseinrichtung 12 und dem Fotosensor abhängig von der Fresnel-Zahl und dem Durchmesser der Blende einstellen.

Die beiden Interferogramme 22a, 22b werden in Spektralfunktionen 24a, 24b überführt. Dies erfolgt insbesondere dadurch, dass die Interferogramme 22a, 22b aus dem Ortsbereich in den Frequenzbereich transformiert werden. Es eignet sich insbesondere hierbei eine Fourier-Transformation, die, falls die Interferogramme 22a, 22b digital vorliegen, auch nummerisch als FFT durchgeführt werden kann. Die sich ergebenden Spektralfunktionen 24a, 24b weisen ein zentrales Maximum und zwei dazu benachbarte lokale Maxima auf, wie in der Fig. 6b gezeigt ist. Der Abstand zwischen dem zentralen Maximum und den beiden lokalen Maxima ergibt sich durch den Shearbetrag am Shearelement 14 als auch die Wellenlänge des verwendeten Lasers. Das Maximum 30 ist repräsentativ für die Hintergrundintensität des Interferogramms 22a, 22b, wohingegen die beiden lokalen Maxima 32a, 32b die gesuchten Phaseninformationen enthalten.

Nachdem die Spektralfunktionen 24a, 24b berechnet wurden, ist es mit Hilfe eines geeigneten Filters möglich, insbesondere eines der lokalen Maxima 32a, 32b zu maskieren, beispielsweise unter Verwendung eines Bandpassfilters, der um die Zentralfrequenz eines der lokalen Maxima 32a, 32b herum eine Maskierung durchführt. Mit Hilfe des Filters lässt sich somit eine Phaseninformation von der Hintergrundintensität separieren.

Somit liegen maskierte Spektralfunktionen 26a, 26 vor, welche anschließend in den Ortsbereich zurücktransformiert werden und Interferogramme 28a, 28b vorliegen.

Im Ortsbereich lassen sich nun die Phaseninformationen durch Berechnung des Arkustangens des Imaginärteils geteilt durch den Realteil der rücktransformierten Interferogramme erhalten.

Die Rücktransformierten Interferogramme, insbesondere deren Phaseninformationen, können miteinander korreliert, insbesondere durch Bildung einer Differenz der Phasen. Das Differenzbild ist das gewünschte Shearogramm 34. Dies kann wie zuvor beschrieben erfolgen.

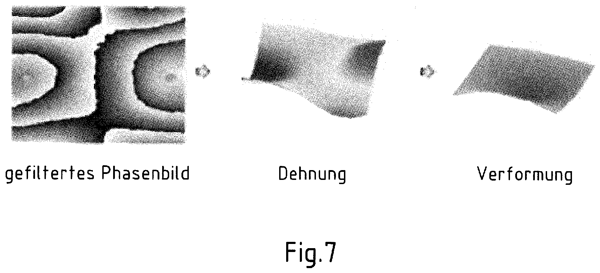

Dieses Shearogramm 34 enthält die relative Phasendifferenz zwischen dem Werkstück 4 im unbelasteten Zustand und dem Werkstück 4 im belasteten Zustand (oder umgekehrt). Aus dieser relativen Phasendifferenz lässt sich, wie in Fig. 7 gezeigt, mittels 1D, 2D, oder auf 3D-Demodulierung (unwrapping) die räumliche Dehnung bestimmen. Anhand dieser Variation der Dehnung können Fehlstellen an dem Werkstück 4 nicht nur an dessen Oberfläche, sondern auch unter der Oberfläche detektiert werden. Das Dehnungsverhalten ist insbesondere im Bereich von Fehlstellen unterschiedlich. Durch Integration der Dehnungsinformation, insbesondere durch nummerische Integration, lässt sich insbesondere auch die Verformung an dem Werkstück 4 feststellen.

Die notwendigen Rechenschritte, um das Shearogramm 34 zu erhalten, lassen sich mit modernen Rechnern in Sekundenschnelle durchführen, so dass zwei Interferogramme 22a, 22b die zeitlich nacheinander erfasst wurden, unmittelbar miteinander korreliert werden können und in nahezu Echtzeit Shearogramm 34 bzw. die hieraus ermittelten Dehnungs- bzw. Verformungsinformationen, wie in Fig. 7 dargestellt, erhältlich sind.

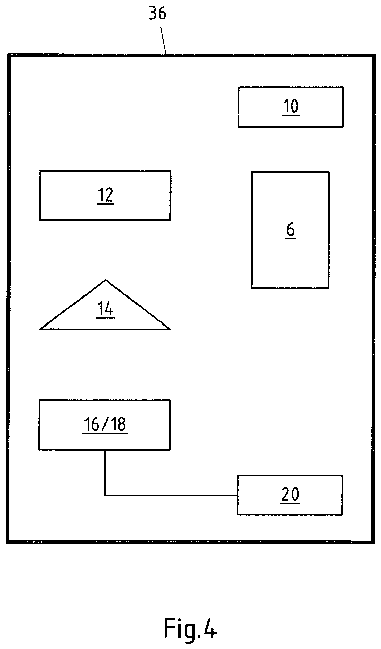

Diese besonders schnelle Auswertemöglichkeit bietet die Option, die Shearografievorrichtung 2 in mobilen Inspektionsplattformen zur Anwendung zu bringen. Hierzu ist es vorteilhaft, wenn die Shearografievorrichtung 2 auf einem mobilen Träger 36 montiert ist. Auf dem mobilen Träger 36 ist die Strahlquelle 6, die Beugungseinrichtung 12, das Shearelement 14 sowie die Aufnahmeeinrichtung, insbesondere das Objektiv 16 und der Fotosensor 18 untergebracht. Ferner kann eine Auswerteeinrichtung 20 vorgesehen sein, die zumindest die erfassten Interferogramme 22a, 22b zwischenspeichert und gegebenenfalls drahtlos übermittelt. Dies ist in Fig. 4 dargestellt.

Auf dem Träger 36 können die verbauten Komponenten ortsfest zueinander angeordnet sein. Auch eine Aufweitungslinse 10 sowie ein Spektralfilter können vor der Beugungseinrichtung 12 und/oder dem Sensor 18 vorgesehen sein. Durch den Spektralfilter kann erreicht werden, dass nur Strahlen mit der Frequenz der Strahlquelle, insbesondere der Frequenz des Lasers zum Sensor 18 gelangen

Die Shearografievorrichtung 2 lässt sich auf dem Träger 36 ausrichten und insbesondere die Abstände zwischen der Beugungseinrichtung 12, dem Shearelement 14 sowie dem Fotosensor 18 lassen sich einstellen. Die einmal vorgenommene Einstellung kann dann statisch bleiben und der mobile Träger 36 kann beispielsweise auf einer mobilen Inspektionsplattform montiert werden.

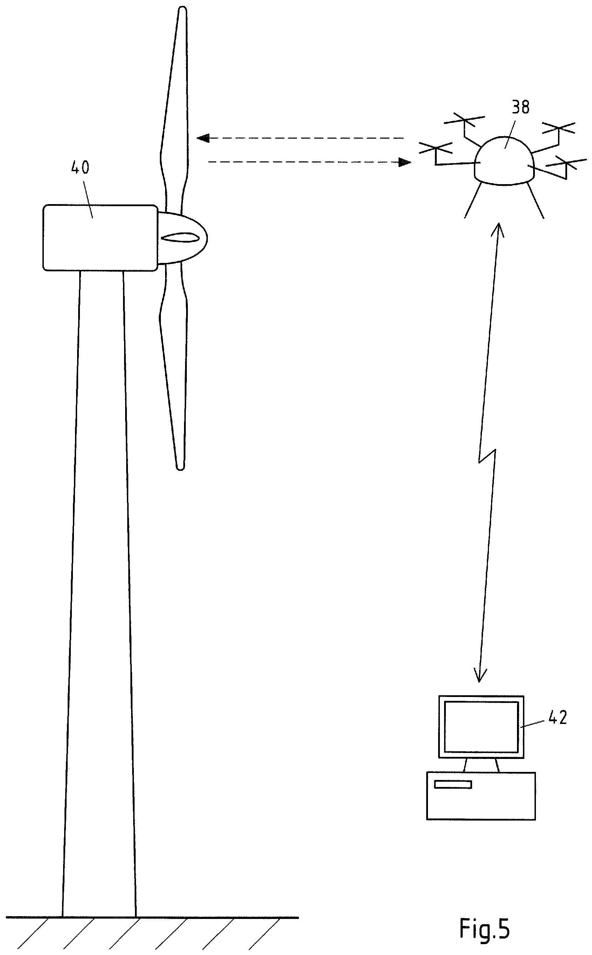

Eine solche mobile Inspektionsplattform ist in Form einer Flugdrohne 38 in Fig. 5 dargestellt.

Die Flugdrohne 38 eignet sich beispielsweise zur Inspektion einer Windkraftanlage 40. Mit Hilfe der Flugdrohne 38 lassen sich beispielsweise die Rotorblätter der Windkraftanlage 40 abfliegen und mit Hilfe der Shearografievorrichtung 2 lässt sich eine Werkstoffprüfung der Rotorblätter durchführen. Durch Übertragung der Interferogramme 22a, 22b bzw. des erhaltenen Interferogramms 34 von der Flugdrohne 38 an einen Rechner 42, insbesondere drahtlos können die Inspektionsergebnisse in nahezu Echtzeit auf einem Bildschirm angezeigt werden. Dies ermöglicht es, unmittelbar auf Messergebnisse zu reagieren und gegebenenfalls Detailprüfungen mit Hilfe der Flugdrohne 38 an möglichen Fehlstellen durchzuführen.

Es versteht sich, dass die Shearografievorrichtung nicht nur auf einem Träger, wie z.B. einer Drohne installiert werden kann, sondern auch in anderen Anwendungen, wie z.B. Industrieanlagen, Bauwerken und dergleichen. Eine Werkstoffprüfung kann z.B. an einer Fertigungsstraße montiert sein und unmittelbar im Fertigungsprozess eine automatisierte Prüfung durchführen,

Durch die gegenständliche Shearografievorrichtung ist eine nahezu Echtzeitwerkstoffprüfung möglich. Die Lichtausbeute ist erheblich verbessert gegenüber herkömmlichen Shearografievorrichtungen, so dass Laser mit geringer Strahlleistung ausreichend sein können. Die räumliche Phasenverschiebung ermöglicht es, zwei zeitlich aufeinanderfolgende Interferogramme unmittelbar miteinander zu korrelieren, um hieraus Dehnungs- bzw. Verformungsinformationen an dem Werkstück zu erhalten. Ein kompakter Aufbau der Shearografievorrichtung ermöglicht es, diese auf einem mobilen Träger, insbesondere auf einer Inspektionsplattform, wie beispielsweise einer Drohne zu installieren. Eine drahtlose Übertragung der erfassten Interferogramme bzw. der bereits auf der Inspektionsplattform errechneten Shearogramme ermöglicht eine nahezu Echtzeitkontrolle der Messergebnisse.

**Bezugszeichenliste**

| | |
|---|---|
| 2 | Shearografievorrichtung |
| 4 | Werkstück |
| 6 | Strahlquelle |
| 8 | Lichtstrahl |
| 10 | Aufweitungslinse |
| 12 | Beugungseinrichtung |
| 14 | Shearelement |
| 16 | Objektiv |
| 18 | Fotosensor |
| 20 | Auswertungseinrichtung |
| 22a, b | Interferogramm |
| 24a, b | Spektralfunktion |
| 26a, b | maskierte Spektralfunktion |
| 28a, b | maskiertes Interferogramm |
| 30 | Hintergrundintensität |
| 32a, b | Phaseninformation |
| 34 | Shearogramm |
| 36 | mobiler Träger |
| 38 | Flugdrohne |
| 40 | Windkraftanlage |
| 42 | Computer |

**Patentansprüche**

1. Shearografievorrichtung mit,

 - einem mobilen Träger,
 - einer kohärenten Strahlquelle (6),
 - einer optischen Beugungseinrichtung (12) zum Beugen der von der Strahlquelle (6) ausgestrahlten, über ein Messobjekt reflektieren Strahlung, und
 - einer Aufnahmeeinrichtung (18) zum Erfassen der durch die Beugungseinrichtung (12) transmittierten Strahlung von der Strahlquelle (6), wobei
 - zwischen der Beugungseinrichtung (12) und der Aufnahmeeinrichtung (18) ein Shearelement (14) derart angeordnet ist, dass zumindest ein erster Teil der durch die Beugungseinrichtung (12) transmittierten, von der Aufnahmeeinrichtung (18) erfassten Strahlung der Strahlquelle (6) an weniger als vier Grenzflächen des Shearelements (14) gebrochen wird, **dadurch gekennzeichnet,**

- **dass** die Beugungseinrichtung (12), das Shearelement (14) und die Aufnahmeeinrichtung (18) auf dem gemeinsamen, mobilen Träger montiert sind so dass
- die Ausrichtung und der Abstand zwischen Beugungseinrichtung (12), Shearelement (14) und Aufnahmeeinrichtung (18) während einer Messung konstant ist, und
- **dass** das Shearelement (14) und die Beugungseinrichtung um eine optische Achse eines Objektivs der Aufnahmeeinrichtung (18) motorisch verdrehbar sind.

2. Shearografievorrichtung nach Anspruch 1,
   **dadurch gekennzeichnet,**

   - **dass** das Shearelement (14) derart angeordnet ist, dass zumindest ein erster Teil der durch die Beugungseinrichtung (12) transmittierten, von der Aufnahmeeinrichtung (18) erfassten Strahlung der Strahlquelle (6) an zwei Grenzflächen des Shearelements (14) gebrochen wird.

3. Shearografievorrichtung nach Anspruch 1 oder 2,
   **dadurch gekennzeichnet,**

   - **dass** das Shearelement (14) ein Biprisma ist, und/oder
   - **dass** das Shearelement (14) ein optischer Keil ist.

4. Shearografievorrichtung nach einem der vorangehenden Ansprüche,
   **dadurch gekennzeichnet,**

   - **dass** das Shearelement (14) derart angeordnet ist, dass zumindest ein zweiter Teil der durch die Beugungseinrichtung (12) transmittierten, von der Aufnahmeeinrichtung (18) erfassten Strahlung der Strahlquelle (6) von dem Shearelement (14) ungebrochen von der Aufnahmeeinrichtung (18) erfasst wird.

5. Shearografievorrichtung nach einem der vorangehenden Ansprüche,
   **dadurch gekennzeichnet,**

   - **dass** die Beugungseinrichtung (12) eine einfache oder mehrfache Lochblende, eine einfache oder mehrfache Streifenblende oder ein optisches Gitter ist.

6. Shearografievorrichtung nach einem der vorangehenden Ansprüche,
   **dadurch gekennzeichnet,**

   - **dass** die Aufnahmeeinrichtung (18) zumindest einen optischen Sensor, insbesondere einen CMOS Sensor aufweist und zum Erfassen eines Interferogramms der von dem Messobjekt reflektieren Strahlung eingerichtet ist.

7. Shearografievorrichtung nach einem der vorangehenden Ansprüche,
   **dadurch gekennzeichnet,**

   - **dass** eine Auswerteeinrichtung (20) dazu eingerichtet ist, zwei zeitlich nacheinander erfasste Interferogramme zu korrelieren und ein Shearogramm zu bilden.

8. Shearografievorrichtung nach Anspruch 7,
   **dadurch gekennzeichnet,**

   - **dass** die Auswerteeinrichtung (20) dazu eingerichtet ist ein Interferogramm der Aufnahmeeinrichtung (18) in eine Spektralfunktion zu transformieren und ein Filter die Spektralfunktion maskiert.

9. Shearografievorrichtung nach einem der vorangehenden Ansprüche,
   **dadurch gekennzeichnet,**

   - **dass** der Träger eine mobile Inspektionsplattform, insbesondere eine Drohne, insbesondere eine Flugdrohne ist.

10. Shearografievorrichtung nach einem der vorangehenden Ansprüche,
    **dadurch gekennzeichnet,**

    - **dass** eine Kommunikationseinrichtung zur drahtlosen Übertragung der Bilder der Aufnahmeeinrichtung (18) und/oder der Auswerteergebnisse der Auswerteeinrichtung (20) eingerichtet ist.

11. Shearografievorrichtung nach einem der vorangehenden Ansprüche,
    **dadurch gekennzeichnet,**

    - **dass** die Strahlquelle (6) einen Laser mit einer Maximalleistung der Laserklassen 1, 1M, 2 oder 2M nach DIN EN 60825-1:2008-05 aufweist.

12. Verfahren zur zerstörungsfreien Materialprüfung mittels Shearografie bei dem,

    - ein Messobjekt mit einer kohärenten Strahlquelle (6) bestrahlt wird,
    - die von dem Messobjekt reflektierte Strahlung in einer Beugungseinrichtung (12) gebeugt wird,
    - die gebeugte Strahlung an einer Sheareinrichtung an weniger als vier Grenzflächen des Shearelements (14) gebrochen wird und anschließend ein Interferogramm der gebeugten, gebrochenen Strahlung durch eine Aufnahmeeinrichtung (18) erstellt wird
**dadurch gekennzeichnet,**
- **dass** die Beugungseinrichtung (12), das Shearelement (14) und die Aufnahmeeinrichtung (18) auf einem gemeinsamen, mobilen Träger montiert werden so dass die Ausrichtung und der Abstand zwischen Beugungseinrichtung (12), Shearelement (14) und Aufnahmeeinrichtung (18) während einer Messung konstant ist, und
- **dass** das Shearelement (14) und die Beugungseinrichtung um eine optische Achse eines Objektivs der Aufnahmeeinrichtung (18) motorisch verdreht werden.

13. Verfahren nach Anspruch 12,
**dadurch gekennzeichnet,**

- **dass** das Interferogramm in eine Spektralfunktion transformiert wird, insbesondere
- **dass** die Spektralfunktion mit einem Filter maskiert wird, insbesondere
- **dass** die maskierte Spektralfunktion invers transformiert wird.

14. Verfahren nach Anspruch 13,
**dadurch gekennzeichnet,**

- **dass** zumindest zwei invers transformierte Spektralfunktionen miteinander korreliert werden und ein Shearogramm erhalten wird.

15. Verfahren nach einem der vorangehenden Ansprüche 12 bis 14,
**dadurch gekennzeichnet,**

- **dass** zumindest zwei Interferogramme von einer mobilen Inspektionsplattform erfasst werden und dass die Interferogramme und/oder Shearogramme drahtlos von der Inspektionsplattform übertragen werden.


**Claims**

1. Shearography device with,

- a mobile carrier,
- a coherent beam source (6),
- an optical diffraction device (12) for diffracting the radiation emitted by the beam source (6) and reflected by a test object, and
- a receiving device (18) for detecting the radiation transmitted by the diffraction device (12) from the beam source (6), wherein
- a shear element (14) is arranged between the diffraction device (12) and the receiving device (18) in such a way that at least a first part of the radiation of the beam source (6) transmitted by the diffraction device (12) and detected by the receiving device (18) is refracted at less than four boundary surfaces of the shear element (14),
**characterized in that,**
- the diffraction device (12), the shear element (14) and the receiving device (18) are mounted on the common, mobile carrier so that
- the alignment and the distance between diffraction device (12), shear element (14) and receiving device (18) is constant during a measurement, and
- the shear element (14) and the diffraction device can be rotated by motor about an optical axis of a lens of the recording device (18).

2. Shearography device according to claim 1,
**characterized in that,**

- the shear element (14) is arranged in such a way that at least a first part of the radiation of the beam source (6) transmitted by the diffraction device (12) and detected by the recording device (18) is refracted at two boundary surfaces of the shear element (14).

3. Shearography device according to claim 1 or 2,
**characterized in that,**

- the shear element (14) is a biprism, and/or
- the shear element (14) is an optical wedge.

4. Shearography device according to one of the preceding claims,
**characterized in that,**

- the shear element (14) is arranged in such a way that at least a second part of the radiation of the beam source (6) transmitted by the diffraction device (12) and detected by the recording device (18) is detected by the shear element (14) without being refracted by the recording device (18).

5. Shearography device according to one of the preceding claims,
**characterized in that,**

- the diffraction device (12) is a single or multiple pinhole, a single or multiple stripe diaphragm or an optical grating.

6. Shearography device according to one of the preceding claims,
**characterized in that,**

- the recording device (18) has at least one optical sensor, in particular a CMOS sensor, and is set up to record an interferogram of the radiation reflected by the test object.

7. Shearography device according to one of the preceding claims,
   **characterized in that,**

   - an evaluation device (20) is arranged for the purpose of correlating two subsequently recorded interferograms and forming a shearogram.

8. Shearography device according to claim 7,
   **characterized in that,**

   - the evaluation device (20) is arranged to transform an interferogram of the recording device (18) into a spectral function and a filter masks the spectral function.

9. Shearography device according to one of the preceding claims,
   **characterized in that,**

   - the carrier is a mobile inspection platform, in particular a drone, in particular a flying drone

10. Shearographic device according to one of the preceding claims,
    **characterized in that,**

    - a communication device is arranged for wireless transmission of the images of the recording device (18) and/or the evaluation results of the evaluation device (20).

11. Shearography device according to one of the preceding claims,
    **characterized in that,**

    - the beam source (6) comprises a laser with a maximum output of laser classes 1, 1M, 2 or 2M according to DIN EN 60825-1:2008-05.

12. Method for non-destructive material testing using shearography in which,

    - a test object is irradiated with a coherent beam source (6),
    - the radiation reflected by the test object is diffracted in a diffraction device (12),
    - the diffracted radiation is refracted at a shear device at less than four boundary surfaces of the shear element (14) and then an interferogram of the diffracted, refracted radiation is produced by a recording device (18)
    **characterized in that,**

- the diffraction device (12), the shear element (14) and the receiving device (18) are mounted on a common, mobile carrier so that the alignment and the distance between the diffraction device (12), the shear element (14) and the receiving device (18) is constant during a measurement, and
- the shear element (14) and the diffraction device are rotated by motor about an optical axis of a lens of the recording device (18).

13. Method according to claim 12,
    **characterized in that,**

    - the interferogram is transformed into a spectral function, in particular
    - the spectral function is masked with a filter, in particular
    - the masked spectral function is transformed inversely.

14. The method according to claim 13,
    **characterized in that,**

    - at least two inversely transformed spectral functions are correlated and a shearogram is obtained.

15. Method according to any one of the preceding claims 12 to 14,
    **characterized in that,**

    - at least two interferograms are recorded by a mobile inspection platform and that the interferograms and/or shearograms are transmitted wirelessly from the inspection platform.

**Revendications**

1. Dispositif de shearographie avec

   - un support mobile
   - une source de lumière cohérente (6),
   - un dispositif de diffraction optique (12) pour la diffraction du rayonnement émis par la source de lumière (6), réfléchi par un objet de mesure, et
   - un dispositif de prise d'images (18) pour le captage du rayonnement de la source de lumière (6) transmis par le dispositif de diffraction (12), sachant que,
   - entre le dispositif de diffraction (12) et le dispositif de prise d'images (18), un élément de cisaillement (14) est disposé de telle manière qu'au moins une première partie du rayonnement de la source de lumière (6), transmis par le dispositif de diffraction (12) et saisi par le dispositif de prise d'images (18), soit réfractée sur moins de quatre faces limite de l'élément de cisaillement (14), **caractérisé en ce que**

- le dispositif de diffraction (12), l'élément de cisaillement (14) et le dispositif de prise d'images (18) sont montés en commun sur le support mobile de sorte que l'orientation et l'intervalle entre le dispositif de diffraction (12),

- l'élément de cisaillement (14) et le dispositif de prise d'images (18) soit constant pendant une mesure et que l'élément de cisaillement (14) et

- le dispositif de diffraction peut tourner de manière motorisée autour d'un axe optique d'un objectif du dispositif de prise d'images (18).

2. Dispositif de shearographie selon la revendication 1, **caractérisé en ce que**
l'élément de cisaillement (14) est disposé de telle manière qu'au moins une première partie du rayonnement de la source de lumière (6), transmis par le dispositif de diffraction (12) et saisi par le dispositif de prise d'images (18), soit réfracté sur deux faces limite de l'élément de cisaillement (14).

3. Dispositif de shearographie selon revendication 1 ou 2,
**caractérisé en ce que**
l'élément de cisaillement (14) est un biprisme, et / ou que l'élément de cisaillement (14) est un coin optique.

4. Dispositif de shearographie selon l'une des revendications précédentes,
**caractérisé en ce que**
l'élément de cisaillement (14) est disposé de telle manière qu'au moins une deuxième partie du rayonnement de la source de lumière (6), transmis par le dispositif de diffraction (12) et saisi par le dispositif de prise d'images (18), soit capté par le dispositif de prise d'images (18), non réfracté par l'élément de cisaillement (14).

5. Dispositif de shearographie selon l'une des revendications précédentes,
**caractérisé en ce que**
le dispositif de diffraction (12) est un diaphragme à trou simple ou multiple, un diaphragme à bande simple ou multiple ou un réseau optique.

6. Dispositif de shearographie selon l'une des revendications précédentes,
**caractérisé en ce que**
le dispositif de prise d'images (18) comprend au moins un capteur optique, en particulier un capteur du type CMOS, et est conçu pour capter un interférogramme du rayonnement réfléchi par l'objet de mesure.

7. Dispositif de shearographie selon l'une des revendications précédentes,
**caractérisé en ce qu'**
un dispositif d'évaluation (20) est aménagé pour la corrélation de deux interférogrammes, captés l'un après l'autre dans le temps, et pour la formation d'un shearogramme.

8. Dispositif de shearographie selon la revendication 7,
**caractérisé en ce que**
le dispositif d'évaluation (20) est aménagé pour transformer un interférogramme du dispositif de prise d'images (18) en une fonction spectrale et masquer un filtre de fonction spectrale.

9. Dispositif de shearographie selon l'une des revendications précédentes,
**caractérisé en ce que**
le support est une plateforme d'inspection mobile, en particulier un drone, en particulier un drone aérien.

10. Dispositif de shearographie selon l'une des revendications précédentes,
**caractérisé en ce qu'**
une installation de communication est aménagée pour la transmission sans fil des images du dispositif de prise d'images (18) et / ou des résultats d'évaluation du dispositif d'évaluation (20).

11. Dispositif de shearographie selon l'une des revendications précédentes,
**caractérisé en ce que**
la source de lumière (6) est un laser avec une puissance maximale des classes laser 1, 1M, 2 ou 2M selon DIN EN 60825 - 1 : 2008-05.

12. Procédé de contrôle non destructif de matériaux au moyen de la shearografie, au cours duquel

- un objet de mesure est irradié avec une source de lumière (6) cohérente,
- le rayonnement réfléchi par l'objet de mesure est diffracté dans un dispositif de diffraction (12),
- le rayonnement diffracté est réfracté sur un dispositif de shearographie sur moins de quatre faces limite de l'élément de cisaillement (14) et un interférogramme du rayonnement diffracté, réfracté est exécuté par le dispositif de prise d'images (18),
**caractérisé en ce que**
- le dispositif de diffraction (12), l'élément de cisaillement (14) et le dispositif de prise d'images (18) sont montés sur un support mobile, commun, de sorte que l'orientation et l'intervalle entre dispositif de diffraction (12), élément de cisaillement (14) et dispositif de prise d'images (18) demeure constant pendant une mesure,

- l'élément de cisaillement (14) et le dispositif de diffraction tournent de manière motorisée autour d'un axe optique d'un objectif du dispositif de prise d'images (18).

**13.** Procédé selon la revendication 12,
**caractérisé en ce que**

- l'interférogramme est transformé en une fonction spectrale, en particulier
- que la fonction spectrale est masquée avec un filtre, en particulier
- que la fonction spectrale, masquée avec un filtre, est transformée inversement.

**14.** Procédé selon la revendication 13,
**caractérisé en ce qu'**
au moins deux fonctions spectrales transformées inversement sont corrélées l'une avec l'autre et qu'un shearogramme est obtenu.

**15.** Procédé selon l'une des revendications 12 à 14,
**caractérisé en ce qu'**
au moins deux interférogrammes sont captés par une plateforme d'inspection mobile et que les interférogrammes et / ou shearogrammes sont transmis sans fil par la plateforme d'inspection.

Fig.1

Fig.2

Fig.3a

Fig.3b

36

```
┌──────────────────────────────────────┐
│                                       │
│                          ┌─────────┐  │
│                          │   10    │  │
│                          └─────────┘  │
│                                       │
│   ┌───────────────┐      ┌─────────┐  │
│   │      12       │      │         │  │
│   └───────────────┘      │    6    │  │
│                          │         │  │
│          ╱╲              └─────────┘  │
│         ╱  ╲                          │
│        ╱ 14 ╲                         │
│       ╱──────╲                        │
│                                       │
│   ┌───────────────┐                   │
│   │    16 / 18    │                   │
│   └───────┬───────┘   ┌─────────┐     │
│           └───────────│   20    │     │
│                       └─────────┘     │
│                                       │
└──────────────────────────────────────┘
```

Fig.4

Fig.5

22a

22b

24a

24b

26a

26b

28a

28b

$$\varphi(x,y) = \arctan\frac{\mathrm{Im}\big(k_{_F}(x,y)\big)}{\mathrm{Re}\big(k_{_F}(x,y)\big)} \qquad \varphi'(x,y) = \arctan\frac{\mathrm{Im}\big(k'_{_F}(x,y)\big)}{\mathrm{Re}\big(k'_{_F}(x,y)\big)}$$

$$\Delta = \varphi' - \varphi$$

34

Fig.6a

Fig.6b

gefiltertes Phasenbild          Dehnung          Verformung

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19856400 A1